# EUROPEAN PATENT APPLICATION

(11) **EP 2 173 078 A1**
(43) Date of publication of application: **07.04.2010**
(21) Application number: 08300274.1
(22) Date of filing: 01.10.2008
(51) Int. Cl.: H04L 29/06

(54) **Network device and method for setting up an IPTV session**

(71) Applicant: Thomson Licensing, 92443 Issy-les-Moulineaux Cedex (FR)
(72) Inventor: Henry, Jean-Baptiste, 35520, MELESSE (FR); Straub, Gilles, 35690, Acigné (FR)
(74) Representative: Ruellan-Lemonnier, Brigitte

(57) **Abstract**

The present invention concerns a network device and a method at the network device. The network device comprises a connector for connecting to a local network, a server for providing, to a set top box located on the local network, information on a content available and an address in the local network where the content is available from and an IPTV proxy module for matching the content to an IPTV content being accessible from an IPTV server located on a second network, the second network begin connected with the first network with a gateway device, wherein a set top box requesting the content at the address receives an IPTV content from the IPTV server.

## Description

### FIELD OF THE INVENTION

The present invention relates generally to IPTV and in particular to a device and a method for setting up an IPTV session.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Internet protocol television, IPTV, is generally distributed in an end to end manner between an IPTV server and IPTV clients. A client located in a home network accesses IPTV content at an IPTV server that is located on the Internet. The server is not located in the home network. Each one of the client located in the home network individually connects to the server to get IPTV content. The client registers to a multicast address using for example the Internet Group Management Protocol, IGMP, as specified in IETF RFC 2236.

The Digital Video Broadcasting industry consortium has specified a reference model for the home network. This is the "DVB-HN (Home Network) Reference Model Phase 1; DVB Document A109; February 2007" and named DVB-HN hereinafter. DVB-HN proposes a reference model for the home network for the transport of MPEG-2 transport stream based DVB services over IP based network. The MPEG-2 Transport Streams are delivered among others on the broadband access network using the DVB IP phase 1 protocols that are specified in "Transport of MPEG 2 Transport Stream (TS) Based DVB Services over IP Based Networks; DVB Document A086 Rev. 3; March 2007", also referenced as ETSI TS 102 034 v1.3.1, and noted DVB-IP hereinafter. In particular DVB-IP defines the Service Discovery and Selection (SD&S) mechanism for DVB based AN services over bi-directional IP networks. Service discovery is a mechanism enabling the discovery of DVB-IP services available over bi-directional IP networks. The service discovery provides the presentation of a list of services with information at the receiver, enabling the user to choose a service and access the chosen service.

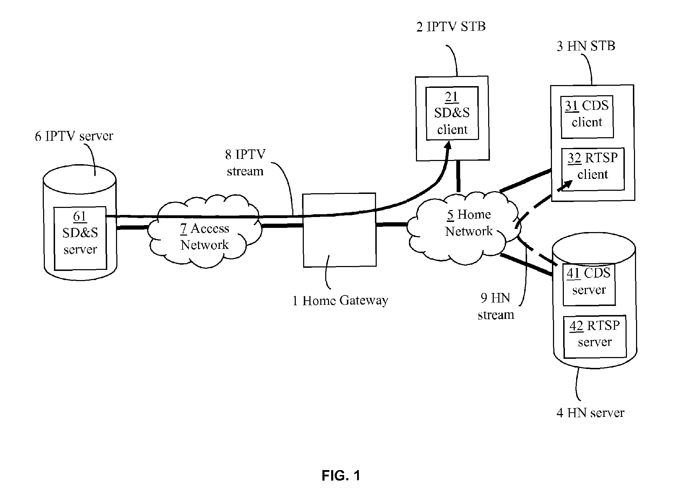

Figure 1 illustrates a home network according to the DVB-HN. It comprises a home gateway 1, also noted HG hereinafter, that comprises routing means for interconnecting a home network 5 to an access network 7. An IPTV STB 2 connected to the home network 5 accesses content on an IPTV server 6 through the access network 7. The IPTV STB comprises an SD&S client module 21 and the server comprises a SD&S server module 61. Once a service has been discovered and chosen by the IPTV STB, an IPTV stream 8 is delivered to the IPTV STB over the access network. It is sent in multicast mode, using the real-time transport protocol (RTP), according to IETF RFC 3550.

DVB-HN also defines the content directory service that is further defined in "UPnP CDS: UPnP Content Directory Service Template Version 1.01 ". UPnP CDS allows devices to locate content that other devices can offer. Nearly any type of content can be enumerated via this service; for example, songs, movies, pictures. A DVB-HN client, such as a set-top box and noted HN STB hereinafter, uses this content discovery service to access MPEG-2 services available on personal video recorders located in the home network. It usually comprises a CDS client module to perform UPnP CDS operations. DVB-HN is reusing DLNA guidelines IEC 62481-1 Ed.1 and IEC 62481-2 Ed.1. IEC 62481-1 Ed.1 corresponds to the "DLNA Networked Device Interoperability guidelines expanded March 2006 Volume 1: Architecture and Protocols". IEC 62481-2 Ed.1 corresponds to the "DLNA Networked Device Interoperability guidelines expanded March 2006 Volume 2: Media Format Profiles". In particular, a DVB-HN client is able to retrieve metadata exposed by a DLNA server by supporting UPnP CDS. It supports HTTP as transport and session management protocol to retrieve content available on a DLNA server.

Figure 1 also illustrates content distribution within the home network, according to the UPnP CDS and DLNA. A HN STB 3 accesses content on a HN server 4 that comprises a CDS server module 41. The HN STB comprises a CDS client module 31 that is adapted to locate content on the CDS server module 41 of the server 4. Once content has been selected on the HN server, an HN stream 9 is then delivered to the HN STB over the home network. The HN stream is sent in unicast mode with the hypertext transfer protocol (HTTP) according to IETF RFC 2616. It may also be sent using RTP, and controlled by a real time streaming protocol (RTSP) session, according to IETF RFC 2326. It goes only to the HN STB.

According to DVB-IPTV standard, a client wishing to receive IPTV content implements a SD&S client module. The client is then an IPTV STB.

An HN STB that doesn't comprise an SD&S module can't directly receive an IPTV stream. However IPTV stream may be accessible through a proxy function located at the gateway. RTP delivery protocol is used in the Home Network, and the CDS and RTSP modules are integrated into the Home Gateway. Thus, the discovery is done thanks to CDS. The RTSP session is local to the home network, and the multicast can be converted into unicast for the HN STB. No transport protocol translation is done. Instead of using RTP in the home, HTTP may be used; transport protocol translation is needed at the gateway, from RTP to HTTP. This transport protocol translation is done in addition to the multicast to unicast when multicast to unicast is performed.

In both cases, the HG needs to be a complex device. It has to process the whole SD&S metadata, convert them into CDS metadata, and store the resulting metadata in its internal memory. It has to manage RTSP sessions, so needs a RTSP server complete implementation. It has to convert RTP stream which are in push mode into HTTP packets which are in pull mode.

### SUMMARY OF THE INVENTION

The present invention attempts to remedy at least some of the concerns connected with the complex gateway in the prior art, by providing a device that is dedicated to perform the IPTV proxy functions.

The present invention concerns a network device comprising a connector for connecting to a local network, a server for providing, to a set top box located on the local network, information on a content available and an address in the local network where the content is available from and an IPTV proxy module for matching the content to an IPTV content being accessible from an IPTV server located on a second network, the second network begin connected with the first network with a gateway device, wherein a set top box requesting the content at the address receives an IPTV content from the IPTV server.

The network device enables a set top box located in a local network, such as a HN STB, to receive IPTV content from an IPTV server located outside the local network. The STB is not capable of directly receiving the IPTV content from the IPTV server. The network device acts as a proxy between the STB and the server. The STB is even not aware that the content is IPTV content. It selects content available at the network device. The content is presented as a multimedia content, such as audio-video content. Instead of providing the content directly to the STB, the network device launches the connection to the IPTV server, so that the STB receives the content from the IPTV server.

According to an embodiment, if the content is available at the network device, the IPTV proxy, on reception of a request from the set top box to access the content, sends a request for joining an IPTV session with an IPTV server located on the second network, the IPTV content being then distributed to the set top box.

If the content is available at the network device, that device directly sends a request to the IPTV server to join an IPTV session.

According to an embodiment, if the content is available at a second device, the IPTV proxy, indicates to the second device the IPTV session corresponding to the content.

If the content is available at another device, the IPTV proxy makes available, to that device, information on the correspondence between the content and the IPTV stream.

According to an embodiment, the network device comprises a RTSP server for enabling the set top box to access the content.

The STB sets up a RTSP session with the RTSP server of the network device to get the information available.

According to an embodiment, the network device comprises an HTTP server for enabling the set top box to access the content.

The STB sets up a session with the HTTP server of the network device to get the information available.

According to an embodiment, the network device comprises a CDS server for providing information on available content to the set top box.

Another object of the invention is a method at a network device for setting up an IPTV communication between a set top box located in a local network and an IPTV server located on a second network, the local network comprising a gateway adapted to connect the local network to the second network, comprising the step of providing to the set top box information on a content available and an address in the local network where the content is available, if the content is available at the network device, on reception of a request from the set top box for receiving the content, sending a request for joining an IPTV session with an IPTV server located on the second network, the IPTV content being then distributed to the set top box and if the content is available at a second device located on the local network, indicating to the second device the IPTV session corresponding to the content, the IPTV content being then distributed to the set top box..

According to an embodiment, the network device indicates to the second device the IPTV session corresponding to the content after reception of a request from that second device.

Another object of the invention is a computer program product comprising program code instructions for executing the steps of the method according to the invention, when that program is executed on a computer. By "computer program product", it is meant a computer program support, which may consist not only in a storing space containing the program, such as a diskette or a cassette, but also in a signal, such as an electrical or optical signal.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

### BRIEF DESCRIPTION OF THE DRAWINGS

The invention will be better understood and illustrated by means of the following embodiment and execution examples, in no way limitative, with reference to the appended figures on which:
- Figure 1 is a (functional) block diagram / flow chart / flow diagram / of an object compliant with the embodiment;
- Figure 2 illustrates / shows / depicts / represents /

In Figure 1, the represented blocks are purely functional entities, which do not necessarily correspond to physically separate entities. Namely, they could be developed in the form of hardware or software, or be implemented in one or several integrated circuits.

### DETAILED DESCRIPTION OF PREFERRED EMBODIMENTS

The exemplary embodiment comes within the framework of .../..., but the invention is not limited to this particular environment and may be applied within other frameworks where .../....

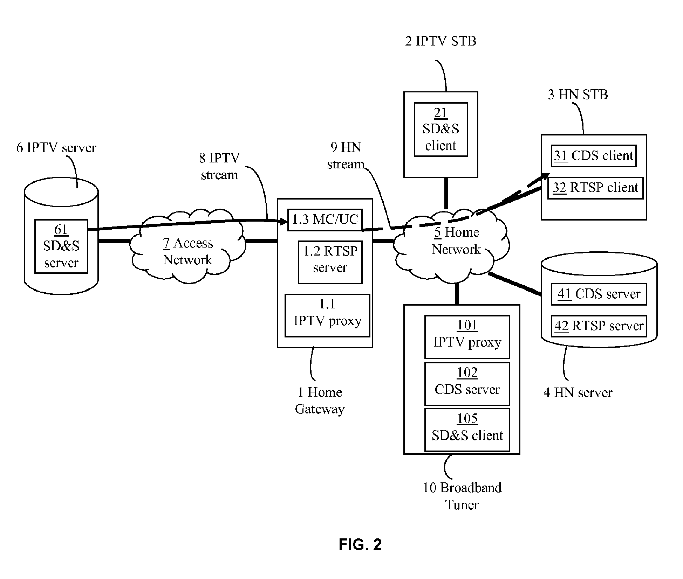

The system according to a first embodiment of the invention is depicted in figure 2. A Home Gateway device comprises an IPTV proxy module 1.1, a RTSP server module 1.2 and a multicast-to-unicast delivery module 1.3, noted MC/UC. An IPTV proxy module 1.1 is adapted to perform the IPTV proxy functions as described hereinafter. In particular, it receives requests from the RTSP server 1.2 to get the address of a channel. On reception of that request, it sends a request to the tuner to get the address. The gateway RTSP server is compliant with the IETF RFC 2326, with a module for communicating with the IPTV proxy.

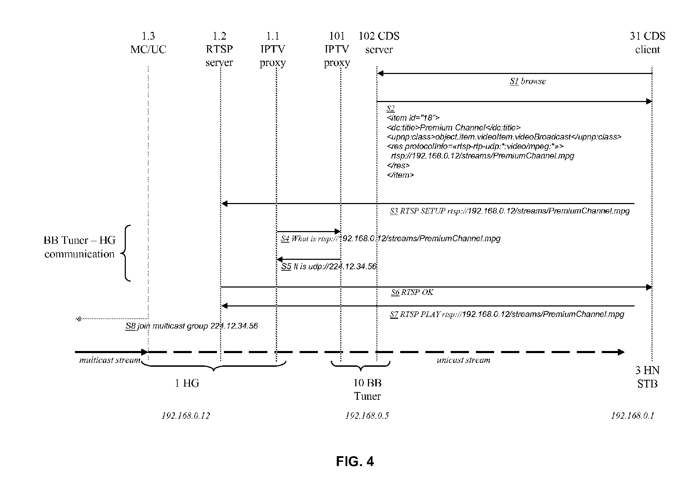

In addition to the system of the prior art, the system comprises a device, the broadband tuner 10, also noted BBT or tuner hereinafter. The tuner comprises an IPTV proxy module 101. It is adapted to perform the IPTV proxy functions as described hereinafter. In particular, as illustrated in figure 4, it manages the correspondence between the channel identifier and the multicast address. On request from the gateway IPTV proxy for a channel, it provides the multicast address corresponding to the channel. That multicast address has been previously received by the SD&S client 105 of the tuner from the SD&S server 61; after reception by the SD&S client, the multicast address is stored in a database and accessible by the IPTV proxy.

According to the first embodiment, the tuner comprises a CDS server module 102. It is adapted to perform the CDS functions with any HN-STB of the home network that comprise a CDS client module.

More generally the tuner IPTV proxy module might be comprised in the CDS module.

Multicast to unicast conversion is meant at the layer 3, at the IP layer. Multicast IP address is converted to the unicast IP address of the destination HN STB device without changing anything else in the packet. The rest of the above protocol layer stacks, such as UDP and RTP, remains unchanged unless explicitly stated. The RTSP server module 1.2 conforms to the IETF RFC 2326.

The figure 4 is a flow diagram of the messages used to set up an IPTV session between a HN STB and an IPTV server. The HN STB browses the Tuner, using the CDS, to check the services available, step S1. It gets information from the broadband tuner that an IPTV stream is available on channel, the premium channel, step S2.
The HN STB sends a RTSP SETUP message to the RTSP server at the gateway, step S3. The RTSP SETUP message indicates how the stream is transported. The message comprises information on the stream and the channel. It doesn't hold information on the access network IPTV stream. The gateway IPTV proxy then requests this information from the tuner IPTV proxy, step S4, and the tuner IPTV proxy answers with the multicast address for this RTSP session, step S5. The gateway can then perform the multicast connection on the access network side, and configure its routing table to forward the received IPTV packets to the HN STB in unicast mode. In response to the RTSP SETUP, the gateway sends a RTSP OK message to the HN STB, step S6. The HN STB then sends a RTSP PLAY message to the RTSP server, step S7, to cause the stream to be played. This makes the gateway join the multicast group, step S8. Then the MC/UC module receives the multicast stream, and converts the stream to a unicast stream that is sent to the HN STB. A single stream, the unicast stream, is sent over the home network. The stream is then managed and controlled over the home network. Of course the stream might not be converted into unicast and sent as a multicast stream over the home network.

According to the embodiment, the communication between the gateway IPTV proxy and the Tuner is done using UPnP mechanisms. The gateway IPTV Proxy has no a priori knowledge of which CDS has been providing this RTSP URL to the HN STB. So it sends the request to all CDS located on the HN. Only the one with knowledge of this RTSP URL answers to the CDS. It is also possible to expose the CDS dealing with external IPTV service as a special CDS with a special XML tag in its Device description (e.g. "IPTV CDS"). Thus the gateway only targets this CDS for the request. According to a variant embodiment, it is also possible to include the CDS identifier in the RTSP URL in order for the gateway IPTV proxy to retrieve it directly. For example, the following URL comprises the CDS identifier
1234567890ABCDEF:
rtsp://192.168.0.12/CDS-1234567890ABCDEF/streams/PremiumChannel.mpg

The CDS of the Tuner performs an action of retrieving such parameters:
Action: GetConnectionParameters
IN arguments: ConnectionString (the RTSP URL).
OUT arguments: ConnectionInfo

This is an XML based message, as indicated below:

```
 Request
   <?xml version="1.0" encoding="utf-8"?>
   <s:Envelope xmlns:s="http://schemas.xmIsoap.org/soap/envelope/"
   s:encodingStyle="http://schemas.xmIsoap.org/soap/encoding/">
   <s:Body>
   <u:GetConnectionParameters
    xmlns:u="urn:schemas-upnp-org:service:ContentDirectoryService:1">
      <ConnectionString>
            rtsp://192.168.0.12/streams/PremiumChannel.mpg
      </ConnectionString>
   </u:GetConnectionParameters>
   </s:Body>
   </s:Envelope>
 
 Response
   <?xml version="1.0" encoding="utf-8"?>
   <s:Envelope xmlns:s="http://schemas.xmlsoap.org/soap/envelope/"
   s:encodingStyle="http://schemas.xmIsoap.org/soap/encoding/">
   <s:Body>
   <u:GetConnectionParametersResponse
    xmlns:u="urn:schemas-upnp-org:service:ContentDirectoryService:1">
      <ConnectionInfo>
            Multicast udp 224.12.34.56
      </ConnectionInfo>
   </u: GetConnectionParametersResponse>
   </s:Body>
   </s:Envelope>
```

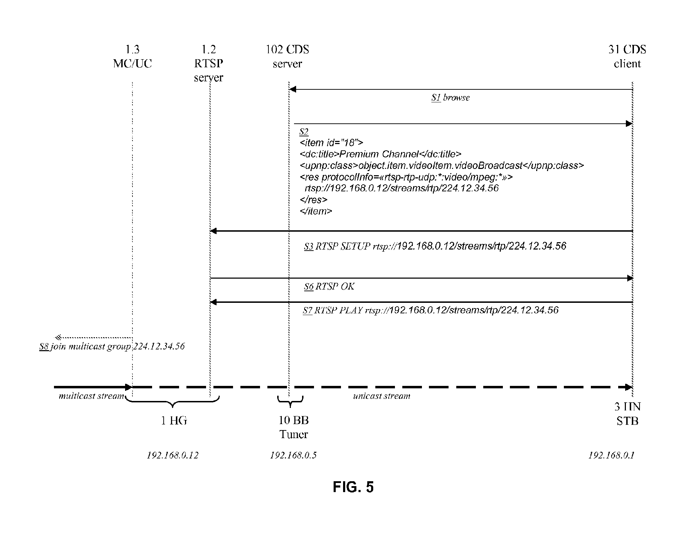

According to a variant to the first embodiment, the HN STB directly gets, at the step S2, the multicast address information, in a manner that is out of the scope of the invention. Information for the gateway to connect to the multicast IPTV stream is included in the RTSP URL provided by the CDS. As indicated in figure 5, the RTSP URL comprises an "rtp" part, indicating that the stream is RTP based, and the "224.12.34.56" tells the multicast address to find it. The port number can be added too.

There is then no communication needed between the gateway and the Tuner; in this embodiment, the steps S4 and S5 are not necessary. On reception of the RTSP PLAY, the gateway joins the multicast group.

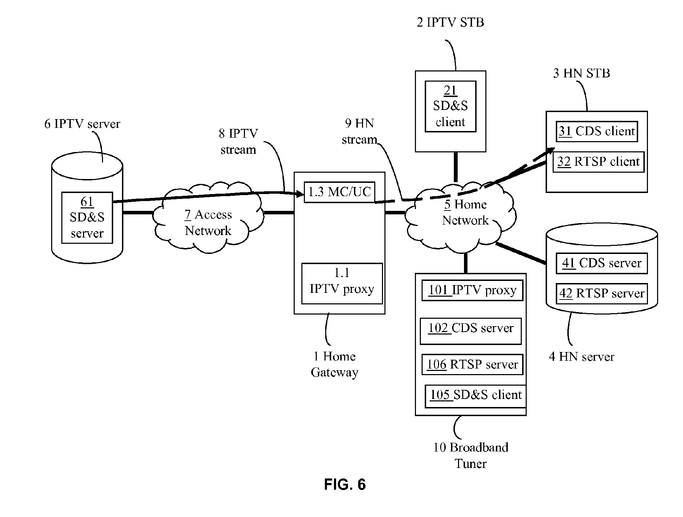

According to a second embodiment, the RTSP server and the CDS server modules are both located within the Tuner device, as indicated on figure 6. The function of the Home Gateway is then centered on routing packets. All discovery and management tasks are performed within the tuner device. Again, only one stream, the unicast stream, is sent over the home network. The stream might also not be converted into unicast and sent as a multicast stream over the home network.

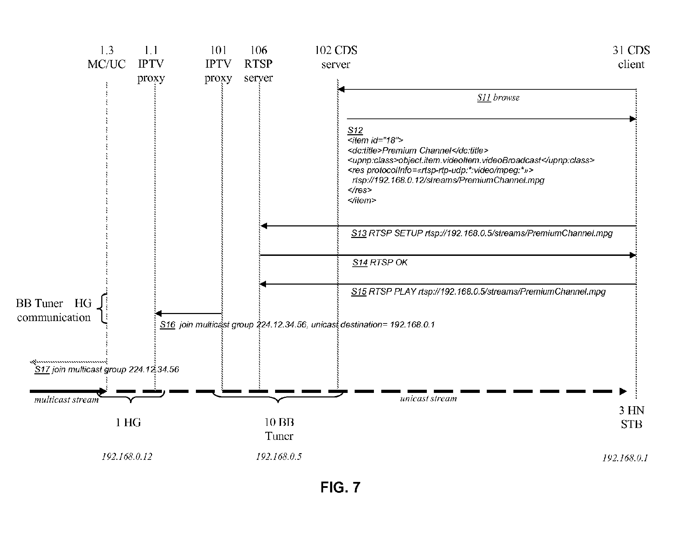

As illustrated in figure 7, the communication between the tuner and the gateway is limited to the join multicast message, step S16. The tuner indicates the multicast address to connect to and the destination IP address of the HN STB. With those two pieces of information, the HG can perform the IGMP connection, step S17, and the multicast to unicast conversion towards the correct destination inside the HN.

According to the embodiment, the communication between the tuner and the HG is done using UPnP mechanisms. The HG holds a specific IPTV proxy UPnP module which has a specific action to be called by the tuner to provide such information:
Action: SetConnection Parameters
IN arguments: JoinExternal (the multicast address to join) and SendToInternal (the IP address to send the unicast stream to).

This is an XML based message, as indicated below:

```
 Request
   <?xml version="1.0" encoding="utf-8"?>
   <s:Envelope xmlns:s="http://schemas.xmIsoap.org/soap/envelope/"
   s:encodingStyle="http://schemas.xmIsoap.org/soap/encoding/">
   <s:Body>
   <u:SetConnectionParameters
    xmlns:u="urn:schemas-upnp-org:service:Iptvproxy:1">
      <JoinExternal>224.12.34.56</JoinExternal>
      <SendTolnternal>192.168.0.1</SendToInternal>
   </u:SetConnectionParameters>
   </s:Body>
   </s:Envelope>
 
 Response
   <?xml version="1.0" encoding="utf-8"?>
   <s:Envelope xmlns:s="http://schemas.xmIsoap.org/soap/envelope/"
   s:encodingStyle="http://schemas.xmIsoap.org/soap/encoding/">
   <s:Body>
   <u:SetConnectionParametersResponse
    xmlns:u="urn:schemas-upnp-org:service:IptvProxy:1">
   </u: SetConnectionParametersResponse>
   </s:Body>
   </s:Envelope>
```

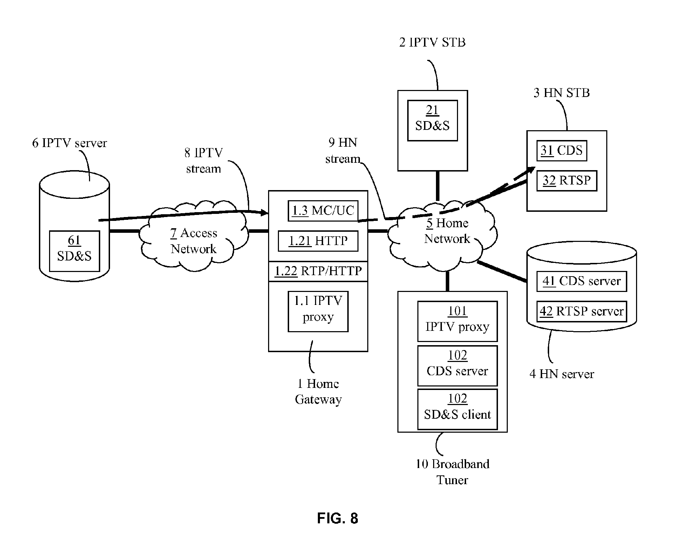

According to a third embodiment, the IPTV stream is converted from RTP to HTTP, and of course from multicast to unicast, as indicated in figure 8. This conversion is done in the Home Gateway. The home gateway comprises an IPTV proxy module 1.1, a MC/UC module 1.3, a HTTP module 1.21 and a RTP/HTTP conversion module 1.22.

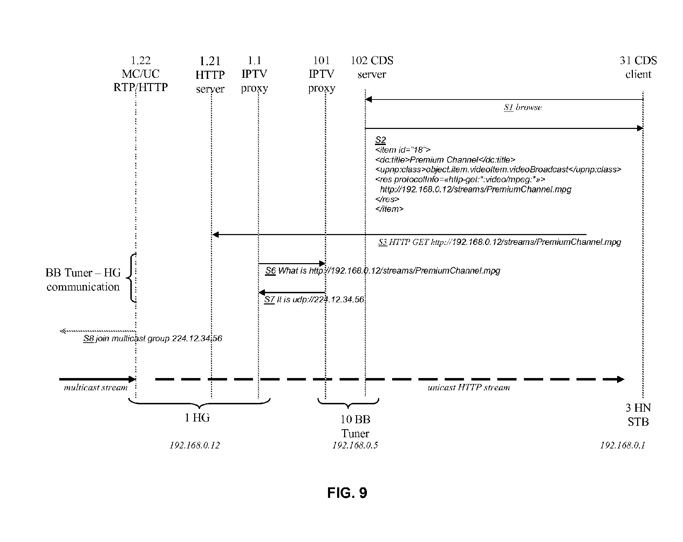

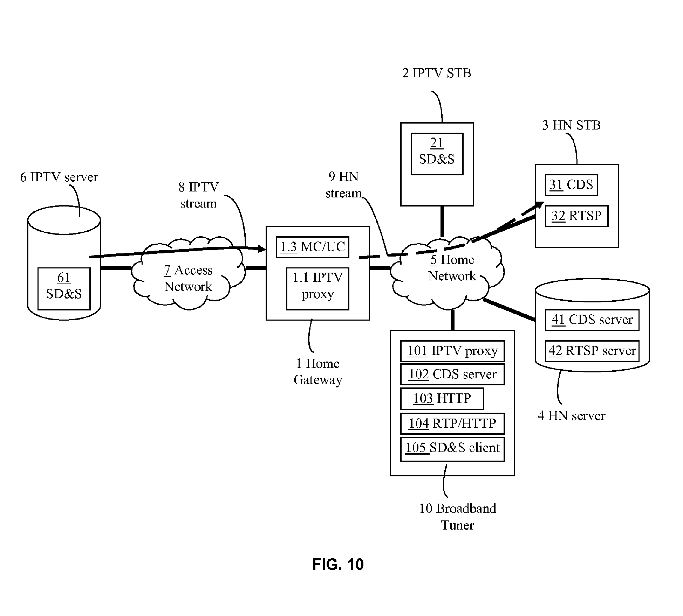

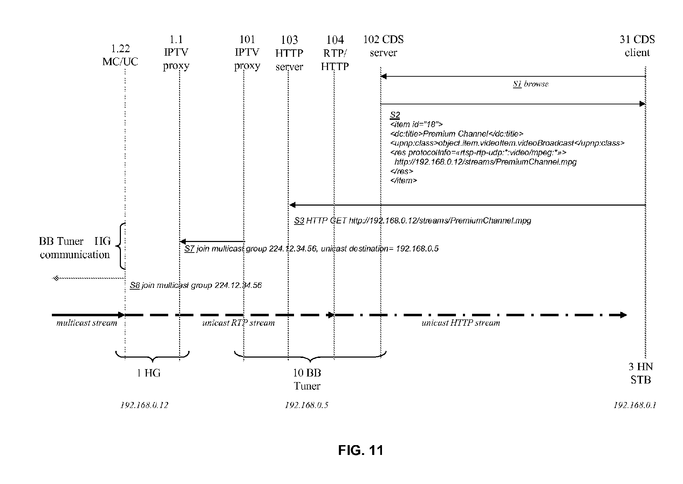

As illustrated in figure 9, the HTTP server only receives a HTTP GET from the HN STB. This message holds no information about the access network IPTV stream. The HTTP server then requests this information from the CDS, and the CDS answers with the multicast address for this HTTP session. The HG can then perform the multicast connection on the access network side, and configure its routing table and transport protocol translation to forward the received multicast-RTP IPTV packets to the HN STB in unicast-HTTP mode.

According to a variant to the third embodiment, the HN STB directly gets, at the step S2, the multicast address. Information for the gateway to connect to the multicast IPTV stream is included in the HTTP GET. In particular, it comprises an "rtp" parameter, indicating that the stream is RTP based, and the "224.12.34.56" tells the multicast address to find it. The port can be added too.

According to a fourth embodiment, an HTTP server is located within the Tuner device. The function of the Home Gateway is then centered on routing packets. All discovery and management tasks are performed within the tuner device. The RTP stream is sent to the Broadband Tuner device which performs the RTP to HTTP translation. It then sends the HTTP stream to the HN STB.

In a variant to the fourth embodiment, the HG doesn't perform any multicast to unicast conversion. The multicast stream is directed to the tuner. The gateway comprises an IGMP snooper that spies the IGMP messages from the Tuner to the IPTV server, to know where to direct the multicast stream to. Then the Broadband Tuner performs the RTP to HTTP translation and sends the unicast HTTP stream to the HN STB.

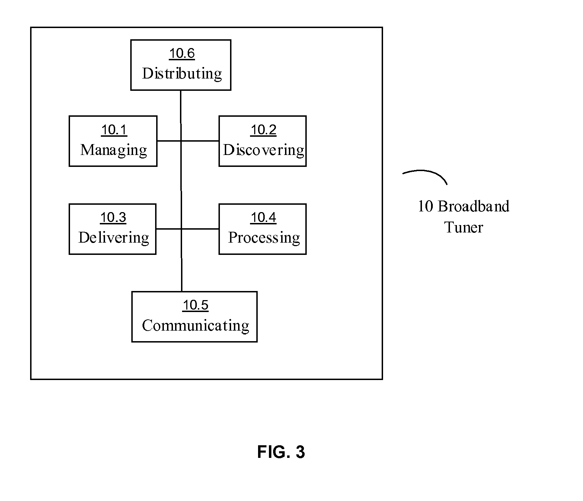

More generally, the tuner device 10 is functionally represented in figure 3. It comprises a discovering module 10.2 for providing service and content discovery services. According to the first embodiment, discovering means is provided with the CDS module.

As indicated in the embodiments, the tuner device may comprise a managing module 10.1 for providing session management in the home network. According to the embodiments, the session management is provided with RTSP or HTTP.

It may also comprise a delivering module 10.3 for delivering content, and in particular receiving content in multicast mode from the IPTV server, and distributing the content in unicast mode to the client.

It also comprises a processor 10.4, and a communicating module 10.5 to interface to the home network. In particular the communicating module 10.5 is an Ethernet interface or a wireless interface, to communicate respectively on an Ethernet network or a Wi-Fi network. It could also be a combination of low speed and high speed communication means.

The tuner could be embedded in any device of the home network, in particular into a STB. It could also be a standalone device.

A Home Network is not necessarily an homogeneous network. It may contain high speed parts such as fast Ethernet or Gigabit Ethernet, as well as low speed part, such as Wi-Fi or Powerline. The Tuner could be provided as a two-box set: one device gathering the CDS and protocol translation functions, but not necessarily rendering functions, and one device providing rendering functions, the HN STB. The Tuner box would then be connected to the Home Gateway on a high speed interface, and the rendering device connected on a low speed interface.

References disclosed in the description, the claims and the drawings may be provided independently or in any appropriate combination. Features may, where appropriate, be implemented in hardware, software, or a combination of the two.

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

## Claims

1. A network device comprising:
- a connector for connecting to a local network,
- a server for providing, to a set top box located on said local network, information on a content available and an address in the local network where said content is available from; and
- an IPTV proxy module for matching said content to an IPTV content being accessible from an IPTV server located on a second network, said second network begin connected with said first network with a gateway device, wherein a set top box requesting said content at said address receives an IPTV content from said IPTV server.

2. A network device according to claim 1, **characterized in that** if said content is available at said network device, the IPTV proxy, on reception of a request from the set top box to access said content, sends a request for joining an IPTV session with an IPTV server located on the second network, said IPTV content being then distributed to the set top box.

3. A network device according to claim 1 or 2, **characterized in that** if said content is available at a second device, the IPTV proxy, indicates to said second device the IPTV session corresponding to said content.

4. Device according to claim 2, **characterized in that** it comprises a RTSP server for enabling said set top box to access said content.

5. Device according to claim 2, **characterized in that** it comprises an HTTP server for enabling said set top box to access said content.

6. Device according to any one of the preceding claim, **characterized in that** it comprises a CDS server for providing information on available content to the set top box.

7. A method at a network device for setting up an IPTV communication between a set top box located in a local network and an IPTV server located on a second network, said local network comprising a gateway adapted to connect the local network to the second network, comprising the step of:
- providing to the set top box information on a content available and an address in the local network where said content is available;
- if said content is available at the network device, on reception of a request from the set top box for receiving said content, sending a request for joining an IPTV session with an IPTV server located on the second network, said IPTV content being then distributed to the set top box; and
- if said content is available at a second device located on the local network, indicating to said second device the IPTV session corresponding to the content, said IPTV content being then distributed to the set top box..

8. Method according to the preceding claim, **characterized in that** it indicates to the second device the IPTV session corresponding to the content after reception of a request from that second device.

9. Computer program product, **characterized in that** it comprises program code instructions for executing the steps of the method according to claim 7 or 8, when said program is executed on a computer.
